# EUROPEAN PATENT APPLICATION

(11) **EP 4 811 146 A1**
(43) Date of publication of application: **23.09.2026**
(21) Application number: 26166402.3
(22) Date of filing: 20.03.2026
(51) Int. Cl.: G06F 13/40

(54) **ADAPTIVE HOT-PLUG SYSTEM**

(30) Priority: 20.03.2025 US 202563774767 P; 03.08.2025 US 202519289041
(71) Applicant: Mellanox Technologies, Ltd., 2069200 Yokneam (IL)
(72) Inventor: RAZ, Moshe, 2069200 Yokneam (IL); ITKIN, Yuval, 2069200 Yokneam (IL); SHANNON, Donald, 2069200 Yokneam (IL); CHEN, Laing, 2069200 Yokneam (IL); SATTINGER, Arnon, 2069200 Yokneam (IL); GANOR, Avraham, 2069200 Yokneam (IL); TAHA, Mohammed, 2069200 Yokneam (IL)
(74) Representative: Mathys & Squire

(57) **Abstract**

An Adaptive Hot-plug System (AHS) includes a system bus including multiple lanes, one or more system-bus slots for plugging-in one or more respective hot-pluggable modules, an AHS controller, and a parent device coupled with the system bus. The AHS controller is to indicate a presence of a hot-pluggable module that is plugged into a system bus slot among the system bus slots. The parent device is to (i) retrieve, from a Non-Volatile Memory (NVM), a configuration of one or more of the lanes that are assigned to the system-bus slot, and (ii) in response to the AHS controller detecting the presence of the hot-pluggable module, apply the retrieved configuration.

## Description

### CROSS-REFERENCE TO RELATED APPLICATIONS

This application claims the benefit of U.S. provisional patent application 63/774,767, filed March 20, 2025, whose disclosure is incorporated herein by reference.

### TECHNICAL FIELD

The present disclosure relates to Hot-Plug computer systems, and in particular to adaptive configuration of hot plug-in systems.

### BACKGROUND

Computer systems often utilize hot-pluggable modules that can be inserted or removed without explicit reconfiguration, and, sometimes, while the system is operational. These modules, such as storage devices or expansion cards, connect to the system bus to communicate with other components. System buses typically comprise multiple lanes for data transfer, with different modules potentially requiring different numbers of lanes or bus configurations.

### SUMMARY

The invention is defined by the claims. In order to illustrate the invention, aspects and embodiments which may or may not fall within the scope of the claims are described herein.

An embodiment that is described herein provides an Adaptive Hot-plug System (AHS) including a system bus including multiple lanes, one or more system-bus slots for plugging-in or plugging-out one or more respective hot-pluggable modules, an AHS controller, and a parent device coupled with the system bus. The AHS controller is to indicate a presence of a hot-pluggable module that is plugged into a system bus slot among the system bus slots. The parent device is to (i) retrieve, from a Non-Volatile Memory (NVM), a configuration of one or more of the lanes that are assigned to the system-bus slot, and (ii) in response to the AHS controller detecting the presence of the hot-pluggable module, apply the retrieved configuration.

In some embodiments, the NVM includes multiple NVM devices that are arranged in a hierarchy and have respective addresses, and the parent device is to automatically discover the hierarchy by scanning the multiple addresses of the NVM devices.

In an embodiment, the configuration specifies a number of the lanes that are assigned to the hot-pluggable module. In an example embodiment, the configuration specifies a size of a channel of the system bus that is connected to the hot-pluggable module. In a disclosed embodiment, the AHS controller is to detect the presence of the hot-pluggable module by detecting that the hot-pluggable module has been plugged into or removed from the system bus.

In some embodiments, the AHS further includes an AHS bus multiplexer for communicating with the AHS controller and with at least one additional AHS controller. In some embodiments, the AHS further includes an interrupt aggregator for receiving interrupts from the AHS controller and from at least one additional AHS controller. In some embodiments, the parent device is to receive an indication of a surprise plug-in or of a managed plug-in of the hot-pluggable module.

There is additionally provided, in accordance with an embodiment that is described herein, an adaptive hot-plugging method. The method includes operating a system including a system bus comprising multiple lanes, and one or more system-bus slots for plugging-in one or more respective hot-pluggable modules. Using an Adaptive Hot-plug System (AHS) controller, a presence of a hot-pluggable module, which is plugged into a system bus slot among the system bus slots, is indicated. Using a parent device that is coupled with the system bus, (i) a configuration of one or more of the lanes assigned to the system-bus slot is retrieved from a Non-Volatile Memory (NVM), and (ii) the retrieved configuration is applied in response to the AHS controller detecting the presence of the hot-pluggable module.

In some embodiments, the NVM comprises multiple NVM devices that are arranged in a hierarchy and have respective addresses, and comprising automatically discovering the hierarchy using the parent device, by scanning the multiple addresses of the NVM devices.

In an embodiment, the configuration specifies a number of the lanes that are assigned to the hot-pluggable module. In an example embodiment, the configuration specifies a size of a channel of the system bus that is connected to the hot-pluggable module. In a disclosed embodiment, detecting the presence of the hot-pluggable module comprises detecting that the hot-pluggable module has been plugged into or removed from the system bus.

In some embodiments, the method further comprises applying an AHS bus multiplexer to communicate with the AHS controller and with at least one additional AHS controller. In some embodiments, the method further comprises applying an interrupt aggregator for receiving interrupts from the AHS controller and from at least one additional AHS controller. In some embodiments, the method further comprises receiving, by the parent device, an indication of a surprise plug-in or of a managed plug-in of the hot-pluggable module.

Any feature of one aspect or embodiment may be applied to other aspects or embodiments, in any appropriate combination. In particular, any feature of a method aspect or embodiment may be applied to an apparatus aspect or embodiment, and vice versa.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates an Adaptive Hot-Plug System (AHS), in accordance with an embodiment that is disclosed herein;
Fig. 2 is a block diagram that schematically illustrates a dual-SSD AHS System, in accordance with an embodiment that is disclosed herein;
Fig. 3 is a block diagram that schematically illustrates a full hierarchy AHS System, in accordance with an embodiment that is disclosed herein;
Fig. 4 is a block diagram that schematically illustrates a multi-channel AHS, in accordance with an embodiment that is disclosed herein;
Fig. 5 is a flowchart that schematically illustrates a top-level method for an adaptive plug-in system, in accordance with an embodiment that is disclosed herein;
Fig. 6 is a flowchart that schematically illustrates a GPIO-multiplexer-level method for AHS configuration, in accordance with an embodiment that is disclosed herein;
Fig. 7 is a flowchart that schematically illustrates a device-group-level method for AHS group scan in accordance with an embodiment that is disclosed herein; and
Fig. 8 is a block diagram that schematically illustrates a computing system, e.g., a data center or a high-performance computing (HPC) cluster, in accordance with an embodiment that is described herein.

### DETAILED DESCRIPTION OF EMBODIMENTS

### OVERVIEW

Traditional hot-plug systems use fixed configurations for modules, limiting flexibility and potentially wasting system resources. When a new module is inserted, the system may need to be reconfigured manually to recognize and properly utilize the module. This can lead to system downtime and inefficient use of available bus bandwidth.

Another challenge with conventional hot-plug architectures is managing interrupts and addressing for multiple hot-pluggable modules. As the number of modules increases, coordinating interrupt signals and maintaining unique addresses for each module becomes more complex. This can result in conflicts, reduced system performance, or limitations on the number of modules that can be supported.

Additionally, traditional systems often lack a standardized way for modules to communicate their specific requirements to the host system. This can lead to compatibility issues or suboptimal configurations when modules with different capabilities are inserted into the system.

Embodiments that are described below provide for adaptive plugging-in and unplugging devices into a system bus, e.g., a PCI Express (PCIe) bus, wherein the system bus configuration is automatically retrieved from a Non-Volatile Memory (NVM), such as an Electrically Erasable Programmable Read Only Memory (EEPROM). In some embodiments, an Adaptive Hot-plug System (AHS) comprises one or more system-bus modules, of which one or more are hot-pluggable modules, and an AHS controller that detects the presence of hot-pluggable modules.

The AHS comprises a system-bus controller, which is referred to hereinbelow as the parent device. To communicate with the system-bus modules, the parent device applies a system-bus configuration, which may specify, for example, one or more lanes of the system bus that are assigned to some of the system bus modules. In embodiments, the parent device retrieves the system-bus configuration from a non-volatile memory (NVM) and then determines which hot-pluggable modules are plugged into the system bus by reading a hot-pluggable modules presence indication from the AHS Controller (the hot-pluggable modules presence indication is also referred to as system status hereinbelow). In some embodiments, the NVM may comprise an Electrically-Erasable Programmable Read Only Memory (EEPROM); other non-volatile memories, such as Flash, may be used in alternative embodiments.

When the AHS Controller detects that a hot-pluggable module has been plugged into or unplugged from the system bus, the AHS controller may send an interrupt signal to the parent device, which will, responsively, update the system status. The parent device can then apply the configuration according to the updated system status.

In the disclosed embodiments, the parent device communicates with the AHS controller hot-pluggable modules over a serial bus such as SMBus or I2C. In some embodiments, the parent device communicates with the NVM over the same or over a separate serial bus and, in yet other embodiments, parallel buses may be used.

In embodiments, the AHS comprises a hierarchy of SMBus (or I2C) devices and features automatic hierarchy discovery, which is achieved by an orderly scanning of the SMBus/I2C addresses.

To support surprise hot-plug-in (e.g., the plugging-in or unplugging of hot-pluggable modules when the power is on) and Managed hot-plug-in (e.g., when a plug-in warning indication precedes the plugging-in or unplugging of the hot-pluggable module), the AHS system further comprises an interrupt aggregator that is configured to issue an interrupt to the parent devices upon hot-plug-in or managed-plug-in indications.

In embodiments that are described below, a three-hierarchy-level AHS system is disclosed, wherein the top hierarchy level comprises one or more device-groups, each device group comprises one or more channels and each channel supports one or more PCIe devices. Another disclosed embodiment describes a full hierarchy AHS system, including interrupt aggregation for surprise and managed plug-in.

In some embodiments, the parent device auto-configures by sequentially scanning the I2C addresses of a given hierarchy level, entering lower-level branches when an address exists and skipping non-existent lower-level branches when an address does not exist.

### SYSTEM DESCRIPTION

Computer systems increasingly rely on hot-pluggable modules, such as storage devices or expansion cards, that can be inserted or removed without explicit reconfiguration or, often, while the system is operational. These modules, (which will sometimes be referred to as devices below), typically connect to a system bus like PCIe to communicate with other components.

Traditional hot-plug systems often use fixed configurations and have limited flexibility; in addition, the managing of interrupts and addressing for multiple hot-pluggable modules may be complex, leading to conflicts or reduced system performance.

The present disclosure describes an Adaptive Hot-plug System (AHS) that addresses these challenges. The AHS uses an I2C interface to transfer status and control signals to/from an AHS controller (which will sometimes be referred to as a hot-plug controller), for managing PCIe devices such as SSDs, that are plugged into a backplane (We will use SSDs in the description below; the disclosed solution, however, is not limited to SSD - any other suitable system-bus hot-pluggable device may be used).

It should be noted that I2C and SMBus are similar but not identical. In some embodiments, I2C or SMBus, or a combination thereof, are used. We will refer below to the two buses interchangeably.

In embodiments, the system-bus is controlled by a parent device. The term parent device will be used herein for a bus owner (e.g., a PCIe or I2C Bus Owner), which is configured to control hot-pluggable modules that may be connected to the systems-bus. In some embodiments, system buses other than PCIe, such as Digital Visual Interface (DVI), Ground-Reference Signaling (GRS) and others, may be used. In embodiments, some or all the PCIe devices may be hot-pluggable, that is, could be plugged-in and/or out of the PCIe bus without any explicit reconfiguration, and, in embodiments, while the system is running.

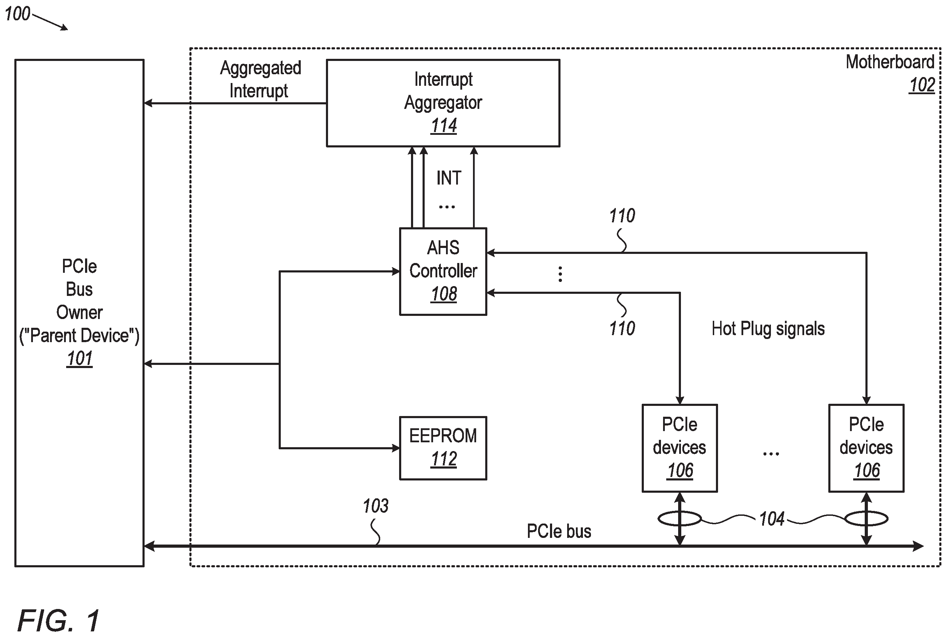

Fig. 1 is a block diagram that schematically illustrates an Adaptive Hot-Plug System (AHS) 100, in accordance with an embodiment that is disclosed herein. AHS 100 comprises a parent device 101 and a motherboard 102. The motherboard comprises a PCIe bus 103 that is connected to one or more PCIe slots 104. A plurality of PCIe devices 106 may be connected to the PCIe bus through respective PCIe slots; some, or all, of the PCIe devices 106 may be hot-pluggable PCIe modules (in some cases, one or more non-hot-pluggable PCIe devices, not shown, may also be connected directly to the PCIe bus, with or without slots).

AHS 100 further comprises an AHS controller 108 that is configured to control and sample the hot plug signals and, thus, detect the presence of hot-pluggable modules, which may be plugged-in, through PCIe Slots 104, into the PCIe bus, and to send a respective hot-pluggable-module presence indication to the parent device (for brevity, we will refer hereinbelow to the hot-pluggable-module presence indication as the presence indication). The parent device is configured to read the PCIe configuration from a Non-Volatile Memory (NVM) (e.g., an Electrically Erasable Programmable Read Only Memory (EEPROM), or a Flash memory) 112, and to determine the system status according to the presence indication. The configuration that the parent device reads from the NVM may include, for example, the number of lanes, the lane ID and the lane size for the PCIe modules in the motherboard, including modules that may not be present; the system status may indicate a list of modules that are plugged-in.

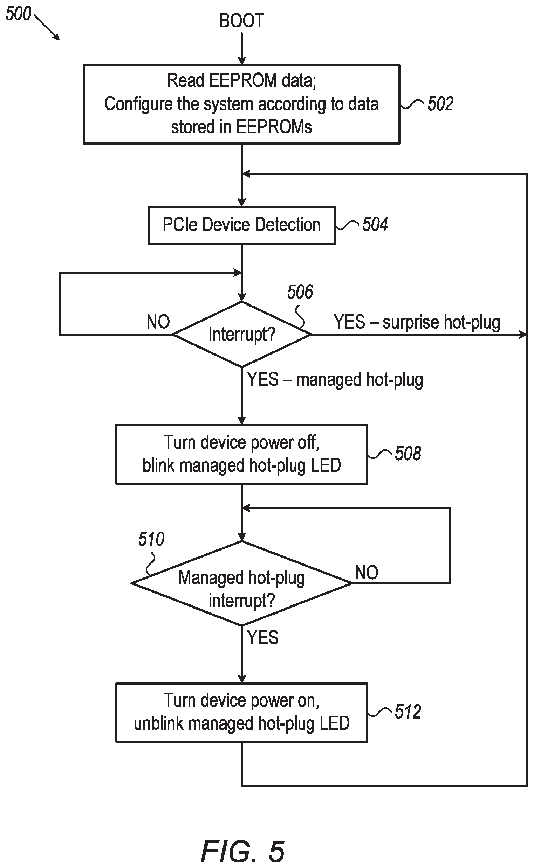

In some embodiments, some, or all of the PCIe devices are controlled and monitored by the AHS Controller through respective hot-plug signals, which may include an indication that the hot-pluggable device is plugged-in into the PCIe bus (referred to as Perst# below) and/ or an indication that a managed-plug-in switch in the motherboard (not shown) is pressed. The AHS controller is configured to build the module presence indication responsively to the PCIe bus Perst# signals. When the AHS controller detects a change in the presence indication, or any change in a hot plug attention button (e.g., a pressed managed-plug-in switch), the AHS controller may send an interrupt indication to an interrupt aggregator 114. The interrupt aggregator is configured to aggregate a plurality of interrupt indications and send an aggregated interrupt signal to the parent device. The parent device may, responsively to the aggregated interrupt signal, read the presence indication from the AHS controller to update the system status, and/or take additional steps (some of which will be described below, with reference to Fig. 5).

The configuration of AHS system 100 illustrated in Fig. 1 and described hereinabove is cited by way of example. Other configurations may be used in alternative embodiments, including AHS systems that use a hierarchy of AHS Channels, each channel comprising an AHS controller and an EEPROM, embodiments that comprise a plurality of EEPROMs, embodiments in which a Flash device is used rather than an EEPROM, and others.

We will now proceed to describe some embodiments that are derived from and extend on AHS 100 described in Fig. 1.

Throughout the disclosures provided hereinbelow, two exemplary integrated circuits are used:
1. An SMBus Multiplexer, such as the PCA9544A 4-channel I2C/SMBus multiplexer. This IC is described in a Texas Instruments Inc. datasheet entitled "PCA9544A Low Voltage 4-Channel I2C and SMBus Multiplexer With Interrupt Logic," March, 2021. Alternatively, any other suitable SMBus Multiplexer can be used.
2. A GPIO Expander, such as the PCA9555 Remote 16-bit I2C and SMBus I/O Expander. This IC is described in a Texas Instruments Inc. datasheet entitled "PCA9555 Remote 16-bit I2C and SMBus I/O Expander with Interrupt Output and Configuration Registers," March, 2021. Alternatively, any other suitable GPIO Expander can be used.

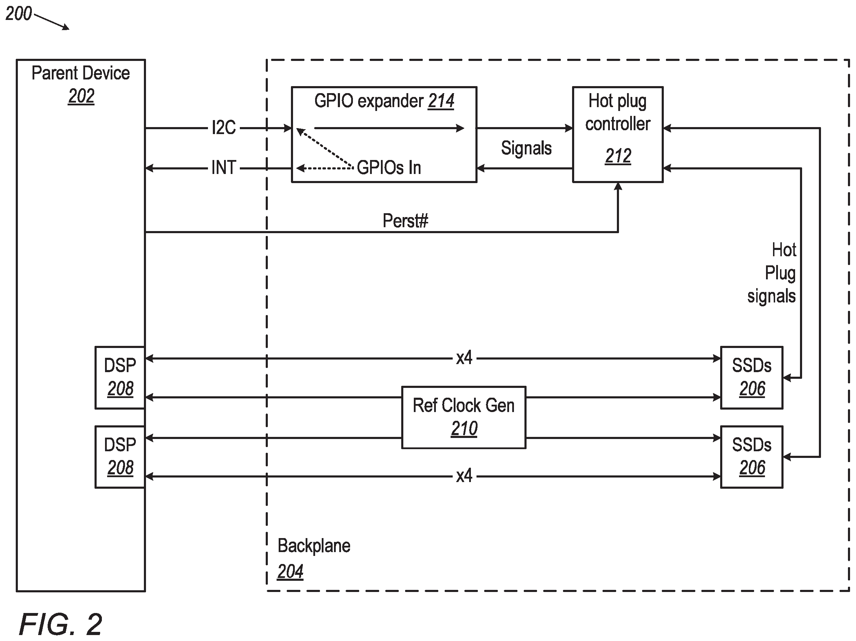

Fig. 2 is a block diagram that schematically illustrates a dual-SSD AHS System 200, in accordance with an embodiment that is disclosed herein. Dual-SSD AHS System 200 comprises a parent device 202, that is connected to a backplane 204. Two PCIe SSD devices 206 are also plugged-in the backplane, each SSD device is connected by four PCIe lanes to a Downstream Port (DSP) 208 in the parent device. A reference clock generator 210 sends clock signals to the SSD devices and to the DSPs, to synchronize data transfer over the PCIe.

In an embodiment, each or both SSD devices are hot-pluggable. The SSD devices are connected to a hot-plug controller circuit 212 through hot-plug signals, indicating that the respective SSD is plugged into the PCIe bus. The hot-plug controller is configured to maintain a presence indication of the SSDs according to the hot plug signals, and to generate an interrupt signal when the presence indication changes (in other words, when any of the hot plug signals changes).

According to the exemplary embodiment shown in Fig. 2, the dual-SSD AHS System further comprises a GPIO expander 214, which interfaces with the hot plug-in controller circuit. The GPIO expander transmits SSD signals to the corresponding interrupt inputs of the parent device and converts the bidirectional I2C signals into separate input and output I2C signals that are connected to the hot plug controller circuit.

The hot plug controller circuit and the parent device communicate the AHS status and other control signals using the GPIO expander.

To provide flexibility and scalability, the AHS supports an I2C hierarchy that allows for either a single AHS channel (hot-plug controller and group of SSDs) or multiple AHS channels, which may be instantiated on the I2C with or without multiplexers.

In embodiments, three hierarchy levels are defined:
1) Channel hierarchy: a unit with one or more PCIe devices, a hot-plug controller and an EEPROM. Each channel may include up to 16 SSDs and may have one or more GPIO expanders.
2) Device group hierarchy: a unit with up to 16 PCIe devices, which can be constructed as one or more channels.
3) Top level hierarchy: a top-level hierarchy circuit is connected to up to 32 device groups. The top-level hierarchy circuit aggregates the group interrupts and multiplexes between I2C groups when a multi-groups topology is selected.

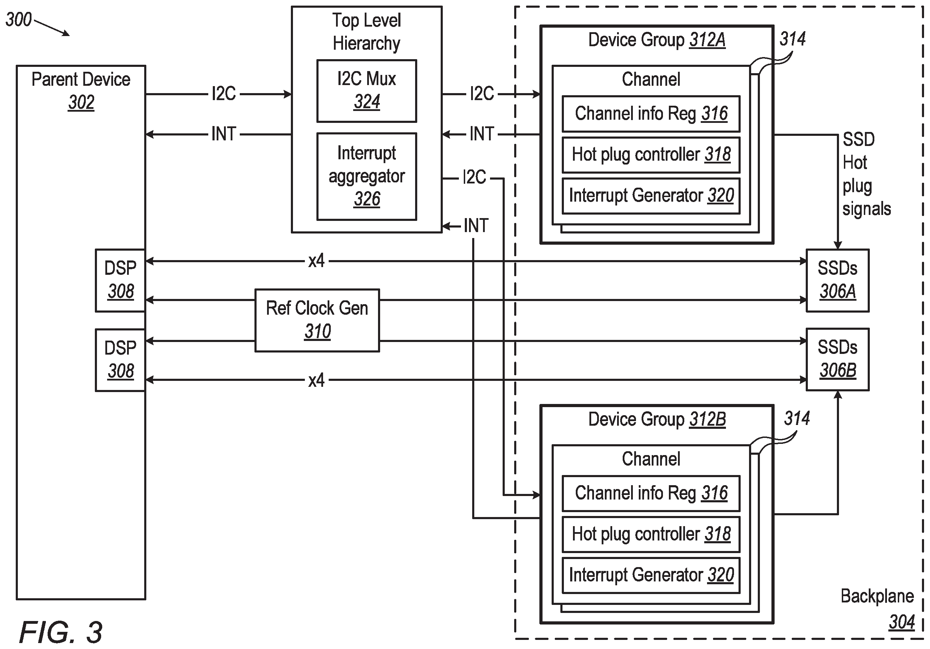

Fig. 3 is a block diagram that schematically illustrates a full hierarchy AHS System 300, in accordance with an embodiment that is disclosed herein. AHS System 300 comprises all hierarchy levels. A parent device 302 is connected to a backplane 304. The backplane accommodates two groups of hot-pluggable PCIe devices, including an SSD 306A in a first group, and an SSD 306B in a second group. Each of the SSDs is connected to a respective DSP 308 in the parent device, and a reference clock generator 310 sends clock signals to the DSP and to the SSDs, to synchronize the PCIe transfers.

Each of SSD devices 306A, 306B is connected to a channel 314 in a device group 312A or 312B. each channel circuit 314 comprises a channel information register 316 to store the channel data, a hot plug controller 318 to detect the presence of a hot-pluggable device and create a presence indication (and, in embodiments, carry out additional functions), and an interrupt generator 320 to generate interrupt (INT) signals responsively to changes in the presence indication. Each device group 312A 312B may comprise a plurality of channels 314.

The two device groups 312A, 312B are connected to a top level hierarchy circuit 322, which aggregates the I2C signals and the interrupt signals of the two device group circuits 312A and 312B. The top-level hierarchy circuit comprises an I2C multiplexer 324 to multiplex the I2C signals, and an interrupt aggregator 326 to aggregate the interrupt signals of the two device groups 312A and 312B.

The configuration of top hierarchy AHS System 300 illustrated in Fig. 3 and described above is cited by way of example. Other configurations may be used in alternative embodiments. For example, in some embodiments there is no interrupt aggregator at the top-level hierarchy; rather, each device group sends an interrupt signal to a separate interrupt input of parent device 302 (which, in this case, comprises multiple interrupt inputs). In various embodiments, the number of devices, channels and groups may be different than those shown in Fig. 3.

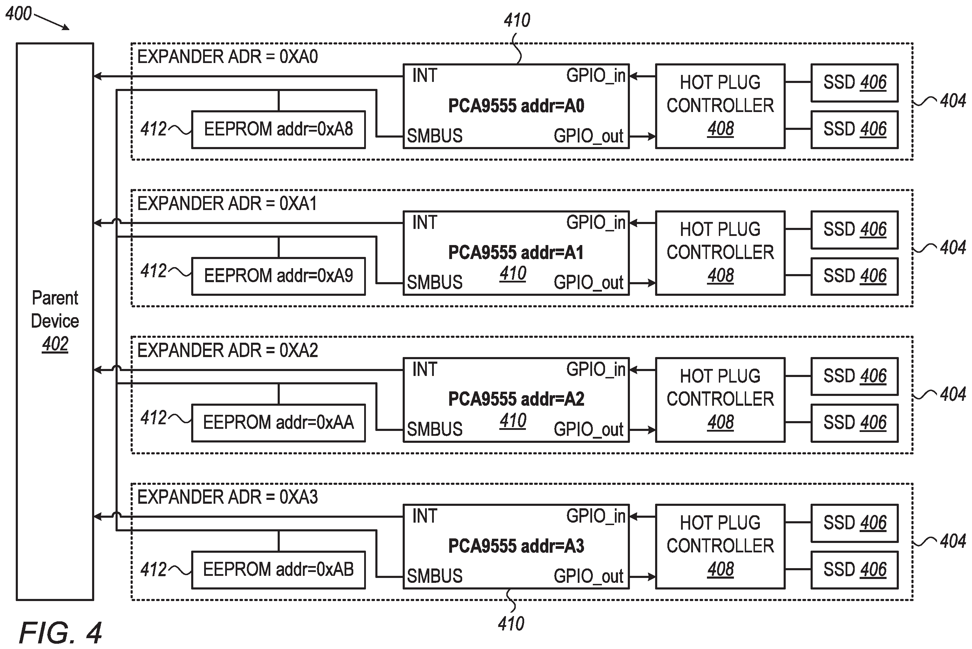

Fig. 4 is a block diagram that schematically illustrates a multi-channel AHS 400, in accordance with an embodiment that is disclosed herein. A parent device 402 is connected to four expander circuits 404, via an SMBus and interrupt indications.

According to the example embodiment illustrated in Fig. 4, each expander circuit 404 comprises two hot-pluggable SSDs 406, a single hot-plug controller 408 that detects the presence of the pluggable SSDs, a GPIO expander device 410 and an EEPROM 412, to store configuration data. The parent device communicates over the SMBus with the EEPROMs and with the GPIO expanders. Note that the four interrupt outputs could be connected to different interrupt inputs of the parent device (as shown) or, alternatively, Ored (using a gate or using wired-OR). According to the example embodiment illustrated in Fig. 4, different I2C addresses are assigned to the various SMBus-accessible circuits :
First GPIO expander: 0xA0, EEPROM - 0xA8;
second GPIO expander: 0xA1, EEPROM - 0xA9;
third GPIO expander: 0xA2, EEPROM - 0xAA;
fourth GPIO expander: 0xA3, EEPROM - 0xAB.

(The addresses shown above are example addresses that are cited by way of example, merely for the sake of conceptual clarity; any other suitable addresses may be used in alternative embodiments.)

The EEPROMs may store configuration data such as number of lanes, size, and others.

### TOPOLOGY DETECTION

In some embodiments, during boot, the parent device automatically conducts a top level I2C multiplexers topology scan, by sequentially checking if I2C multiplexers are present. The parent device initiates the scan, and sequentially checks for the presence of I2C multiplexers, starting with a preset address of I2C Multiplexer 0. If a multiplexer does not respond, the parent device halts the multiplexer scanning process. If I2C Multiplexer 0 does not respond, the parent device determines that a single group topology is implemented.

After conducting the I2C Multiplexer scan, the parent device scans each I2C multiplexer output and attempts to locate the associated EEPROM devices, which indicate that a corresponding channel exists. Each multiplexer output scan begins with serial interface 0 and continues sequentially without gaps. If the EEPROM channel does not respond to any of the EEPROM addresses, the parent device assumes that this device group does not exist, and there are no additional serial interfaces on the current multiplexer output; and then proceeds to the next I2c multiplexer. The I2C multiplexer addresses must be configured consecutively with no gaps.

In embodiments, all backplane logic must be ready before the parent device starts the scan process.

### TOP LEVEL INTERRUPT

In some embodiments, the hot-plug controller sends interrupt indications to the parent device, which, responsively, reads the interrupt registers and the respective GPIO-expander registers, to identify which GPIO expander was changed and, accordingly, which hot-plug device has been plugged-in or unplugged.

Once the GPIO expander is read, an interrupt generator resets the interrupt signal. Each SMBus multiplexer device can handle up to four interrupt/I2C signals. When more than four channels are used, two or more SMBus multiplexer devices are used, each managing four channels.

In an embodiment, the interrupt outputs of all SMBus multiplexer devices are connected in an open-drain configuration, allowing either device to assert the interrupt signal. By reading the SMBus multiplexer device, the parent device firmware can identify which channel triggered the interrupt. It is important to note that if the interrupt signal is active, the firmware should read the interrupt registers of all multiplexers.

### MULTI MULTIPLEXERS

To use more than four I2C buses for the channels, multiple I2C multiplexers may be used at the top level. The multiplexers are instantiated in parallel, with different I2C addresses. To select a given channel, the parent device enables only one I2C channel on one multiplexer, while setting all other multiplexers to the "no channel selected" state (see 9544A Table 4).

### SINGLE GROUP IMPLEMENTATION

In an embodiment, the backplane includes a single channel implementation, which is determined by the non-existence of multiplexer 0. In this case, SMBus multiplexing is not needed.

### AHS CHANNEL

The AHS channel manages the hot-plug process for a plurality of SSD groups, communicating with the parent-device via I2C or SMBus.

The AHS channel has four logical components:
1) channel information EEPROM - Provides the device firmware with the channel topology and signal mapping specifications.
2) An interrupt generator, which consolidates GPIO expander interrupts into a single output using a logic AND function.
3) A hot-plug controller
4) Optional - interrupt register, to determine the channel expanders.

### DEVICE/GROUP CHANNEL TOPOLOGY DETECTION

To facilitate the use of the same channel hardware in a multi-channel configuration (multi-channel in device group) without requiring the addition of a multiplexer, in some embodiments the AHS architecture supports various EEPROM address detections. The parent device should scan all possible addresses of the I2C multiplexer device on each I2C bus to detect the presence of channels.

After identifying a channel by an EEPROM address, the parent device reads the EEPROM contents to determine the number of GPIO expanders and the respective I2C addresses.

In some embodiments, multiple channels may be connected to the same I2C bus without a multiplexer, with each channel having a unique EEPROM and GPIO expander I2C address. Each EEPROM stores information pertaining to its respective channel, including, for example, the GPIO expander I2C address.

In embodiments, each channel includes an EEPROM for channel information and at least one GPIO expander for the SSD signals. Each GPIO expander is logically connected to up to two SSDs. In other embodiments, a larger number of SSDs can be supported.

In some embodiments, a Mapping version may be defined in the EEPROM, to define which signals will be reflected between the hot-plug controller and the device. For example, a mapping version may define that the PRSTN# indication will be mirrored. Other mapping versions may support surprise hot plug with power control.

### EXAMPLE METHODS

We will now present flowcharts that illustrate AHS methods. The flowcharts support AHS systems with surprise hot-plug (plug-in or plug-out) and with managed hot-plug (again, plug-in or plug-out), including three hierarchy levels. We will then discuss how the flowcharts can be simplified (or extended) for other scenarios.

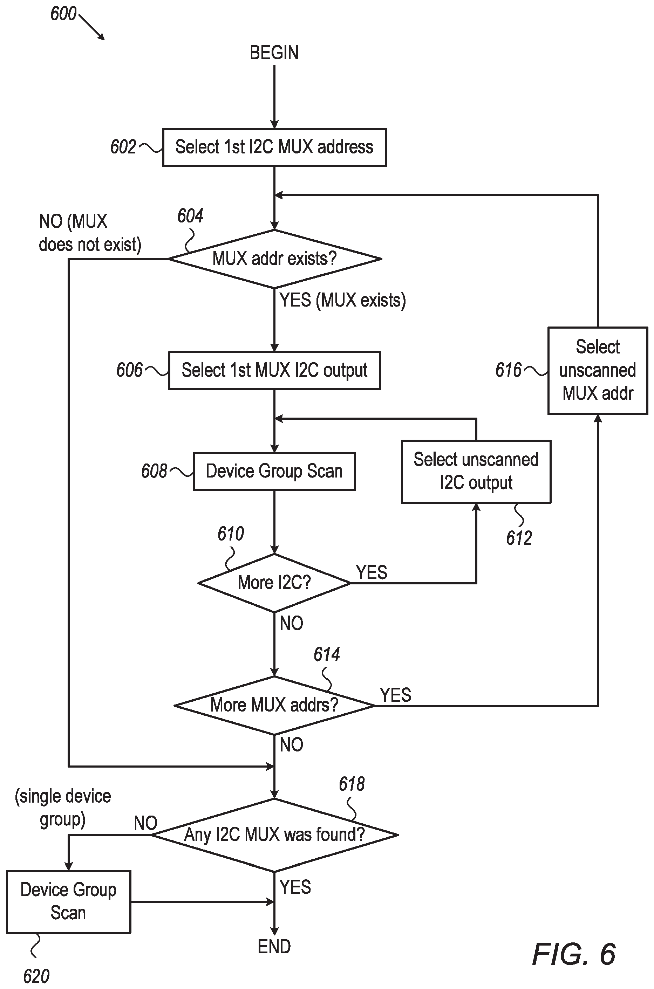

Fig. 5 is a flowchart 500 that schematically illustrates a top-level method for adaptive plug-in system, in accordance with an embodiment that is disclosed herein. The flowchart is carried out by parent device 102, by AHS controller 108 and by interrupt aggregator 114 (Fig. 1). The flowchart is initiated upon system boot (or, in embodiments, further to an external reconfiguration request, or to a reconfiguration that is initiated by the parent device). The flowchart starts at an AHS configuration operation 502, wherein the parent device reads the EEPROM devices and then configures the AHS system according to configuration data that is stored in EEPROM devices (operation 502 will be described below, with reference to Fig. 6).

Next, the parent device enters a PCIe-detect operation 504, wherein the parent device reads the presence indication from the AHS controller and updates the system status accordingly (the AHS controller continuously updates the hot-plug presence according to PCIe devices that are plugged into the PCIe bus).

The parent device now enters a wait-interrupt operation 506 and waits until the interrupt aggregator sends an interrupt indication.

If, in operation 506, a managed hot-plug (plug-in or plug-out) interrupt is received, the parent device will enter a turn-device-power-off operation 508. The interrupt aggregator indicates managed plug-in interrupt when a managed-hot-plug-in push-button switch in the motherboard, adjacent to a hot-plug module, is pressed. When in operation 508, the parent device turns off the power to the respective hot-plug-in device. In some embodiments, the parent device may also blink a corresponding safe-hot-plug LED, to indicate that power to the hot-plug-in slot is off, and the hot plug-in can be safely removed (or a new hot plug-in module can be safely inserted).

After operation 508, the parent device enters a wait-managed-plug-in-interrupt operation 510, to wait for the next pressing of the managed-plug-in switch (which indicates that the user had plugged-in or unplugged the hot-plug modules). When the parent device receives a corresponding interrupt indication, the parent device enters a turn-device-power-on operation 512, wherein the parent device turns the power to the hot plug-in slot on and stops the blinking of the LED. The parent device now reenters operation 504, to update the system status according to the updated presence indication that the parent device reads from the AHS controller.

If, in operation 506, the parent device receives a surprise plug-in interrupt, indicating that a hot plug-in device has been plugged-in or unplugged, the parent device reenters operation 504, to read the updated presence indication form the AHS controller and to update the system status accordingly.

The configuration of flowchart 500, illustrated in Fig. 5 and described hereinabove is cited by way of example. Other configurations may be used in alternative embodiments. In some embodiments, for example, managed hot-plug is not supported. In other embodiments, a two-position switch is used rather than a push-button switch. In embodiments, other safe-hot-plug indications, in lieu of LED blinking, are used (e.g., an audible indication), and, in an embodiment, there is no safe-hot-plug indication.

### AUTOMATIC CONFIGURATION

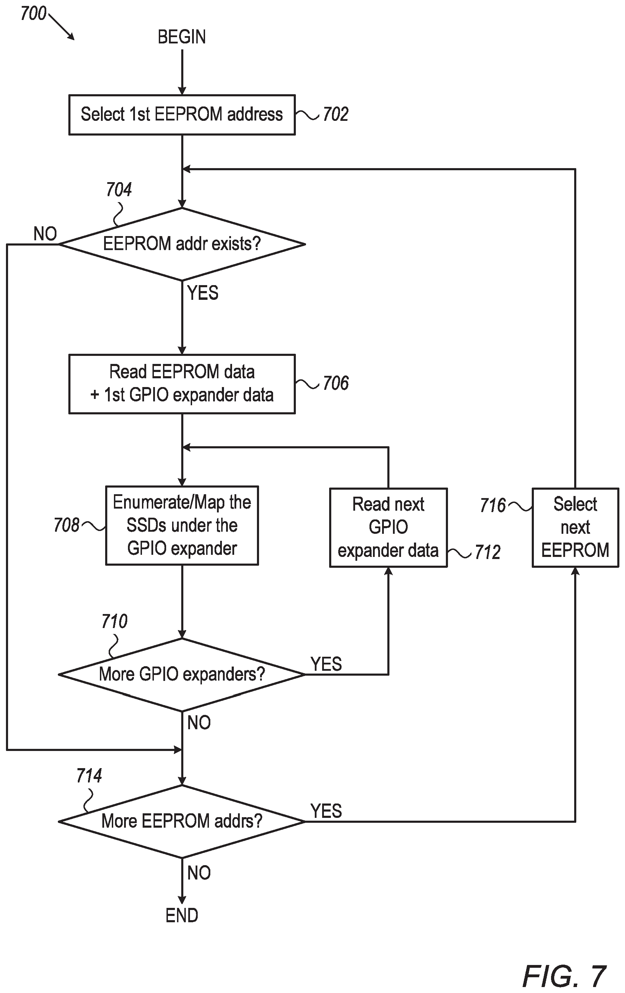

In embodiments, the AHS supports automatic configuration detection across multiple hierarchy levels. The parent device scans the I2C addresses of a given hierarchy level sequentially, entering existing lower hierarchy levels and skipping non-existent lower hierarchy levels. This will be described below, with reference to Figs 6 and 7.

Fig. 6 is a flowchart 600 that schematically illustrates a GPIO-multiplexer-level method for AHS configuration, in accordance with an embodiment that is disclosed herein. The flowchart is executed by parent device 302, jointly with other components of AHS system 300 (Fig. 3). The flowchart begins at a select-first-I2C-mux-address operation 602, wherein the parent device selects a first address of an I2C multiplexer from a predefined range of I2C multiplexer addresses, to access a first I2C multiplexer device (e.g., a 9544, described above). Next, at a check-mux-address-existence operation 604, the parent device checks if an I2C multiplexer device at the selected address exists. For example, in an embodiment, non-existence is determined if the I2C message is not acknowledged (e.g., the SDA line is at logic-high in the ninth SDL pulse of the I2C message). If, in operation 604, there is an I2C multiplexer device at the selected address, the parent device enters a select first multiplexer-output operation 606, to select the first output of the I2C multiplexer device, and then enters a device-group-scan operation 608, to scan the current device group (device-group-scan operation 608 will be described below, with reference to Fig. 7).

After the device group scan operation, the parent device enters a check-more-I2C operation 610, and checks if any more multiplexer outputs (that have not been scanned until this point) exist. If so, the parent device enters a select-unscanned-I2C-output operation 612 to select the next I2C output, and then reenters operation 608 to perform a device-group-scan according to the new I2C output.

If, in operation 610, there are no more unscanned I2C outputs for the current I2C multiplexer, or if, in operation 604, the multiplexer address does not exist, the parent device enters a check-more-multiplexer-address operation 614, and checks if there are other I2C multiplexer addresses (that have not been scanned until this point). If so, the parent device enters a select-unscanned-multiplexer-address operation 616, selects the new multiplexer address, and then reenters operation 604, to check if the multiplexer address exists.

If, in operation 614, there are no more multiplexer addresses, or if, in operation 604, the multiplexer address does not exist, the parent device enters a check-if-any-multiplexer-was-found operation 618, and checks if any multiplexer was found (in other words, check if the multiplexer hierarchy level exists). If no multiplexer has been found, the parent device enters a device-group-scan operation 620. After operation 620, or, if, in operation 618, one or more I2C multiplexers have been found, the flowchart ends.

Fig. 7 is a flowchart 700 that schematically illustrates a device-group-level method for AHS group scan in accordance with an embodiment that is disclosed herein. The method is entered from flowchart 600 (fig. 6), and executed by the same units (e.g., by parent device 302, jointly with other components of AHS system 300 (Fig. 3)).

The flowchart begins with a select-first-EEPROM-address operation 702, wherein the parent device selects a first EEPROM address in a predefined range of EEPROM addresses. Then, at a check-EEPROM-exists operation 704, the parent device checks if an EEPROM exists at the selected address (for example, by reading a known value from an EEPROM address). If an EEPROM exists, the parent device enters a read-first-expander-data operation 706 and reads the data pertaining to the current GPIO expander from the EEPROM. Then, at an enumerate-map-SSDs operation 708, the parent device determines the PCIe configuration data pertaining to the SSD device that corresponds to the current GPIO expander data.

After operation 708 the parent device enters a check-more-expanders operation 710, and checks if there are more GPIO expanders that have not been scanned. If so, the parent device enters a read-next-expander-data operation 712, reads the data pertaining to the current GPIO expander from the EEPROM, and then reenters operation 708, to determine the PCIe configuration data pertaining to the next SSD device.

If, in operation 710, no more unscanned GIO expanders are left, or if, in operation 704, the selected EEPROM address does not exist, the parent device enters a check-more-EEPROM-addresses operation 714, and checks if there are any more EEPROM addresses that have not been scanned. If so, the parent device enters a select-next-EEPROM operation 716 to select the next EEPROM, and then reenters operation 704, to check if the address exists.

If, in operation 714, there are no more EEPROM addresses, the flowchart ends (and control is returned to the calling operation in flowchart 600).

The configuration of flowcharts 500, 600 and 700 illustrated in Figs. 5, 6, 7 and described above are cited by way of example. Other flowcharts may be used in alternative embodiments. For example, in some embodiments, there are more hierarchy levels (e.g., clusters), and the flowcharts illustrate one or more additional scan loops. In some embodiments, where there is only one device group, operation 502 of flowchart 500 calls flowchart 700 (this case is supported in flowchart 600, but, given that only one device group exits, the flowcharts can be simplified).

### APPLICATIONS

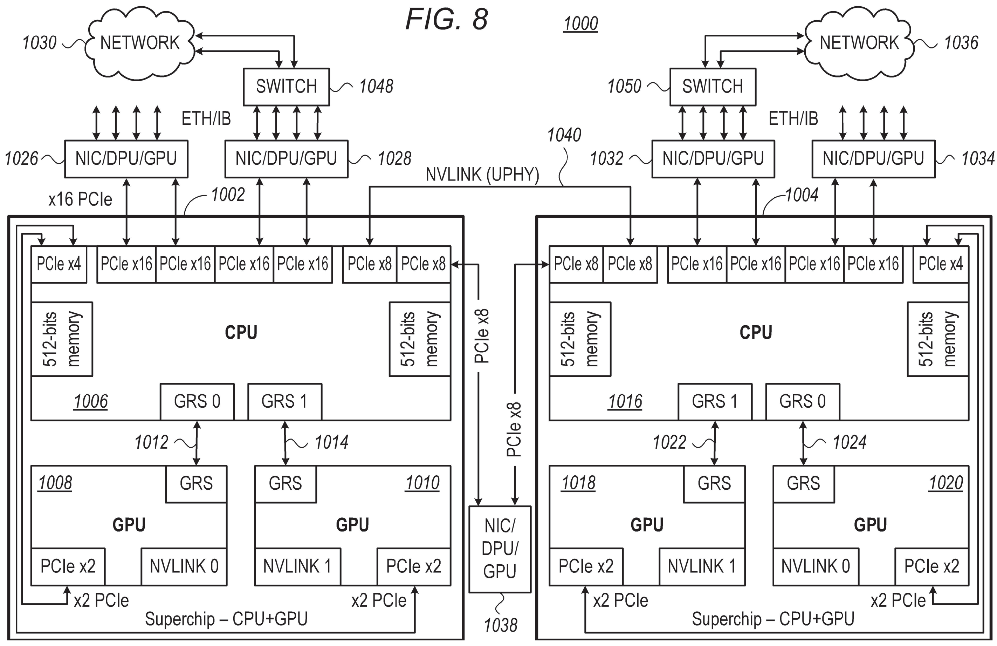

The techniques described above may be used in a variety of computing-device products, such as the computing system described below, with reference to Fig. 8.

Fig. 8 is a block diagram that schematically illustrates a Computing System 1000, e.g., a data center or a high-performance computing (HPC) cluster, in accordance with an embodiment that is described herein. System 1000 comprises a plurality of subsystems, e.g. multiple processing devices coupled to each other, multiple network devices, and multiple networks, according to at least one embodiment. Computing system 1000 is designed with multiple integrated circuits (referred to as processing devices), wherein each integrated circuit can include one or more CPUs and GPUs, forming a powerful and flexible architecture. In embodiments, the various elements of Computing System 1000 may comprise adaptive hot plug system, for automatic configuration of one or more system buses, as described above, with reference to Figs. 1 through 7.

The various processing devices are interconnected via an NVLink, PCIe or other high-speed interconnect, enabling high-speed communication between the subsystems, and are also connected through a NIC, a GPU or DPU to ensure efficient data transfer across computing system 1000 and to one or more external networks 1030, 1036. In the present example, system 1000 comprises a packet switch 1048 that connects NIC/DPU 1028 to network 1030, and a packet switch 1050 that connects NIC/DPU 1032 to network 1036.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1000 can include one or more CPUs and one or more GPUs.

Fig. 8 also demonstrates an example of a multi-GPU architecture. As illustrated in the figure, computing system 1000 includes a processing device 1002 with a multi-GPU architecture. In particular, processing device 1002 may be a system-on-chip and includes multiple subsystems, such as a CPU 1006, a GPU 1008, and a GPU 1010. CPU 1006 can be coupled to GPU 1008 via a die-to-die (D2D) or chip-to-chip (C2C) interconnect 1012, such as a Ground-Referenced Signaling interconnect (GRS interconnect). CPU 1006 can be coupled to GPU 1010 via a D2D or C2C interconnect 1014. CPU 1006 can also couple to GPU 1008 and GPU 1010 via PCIe interconnects.

CPU 1006 can be coupled to one or more NICs, GPUs or DPUs, which are coupled to one or more networks. For example, as illustrated in Fig. 8, CPU 1006 is coupled to a first NIC/DPU/GPU 1026, which is coupled to a network 1030. CPU 1006 is also coupled to a second NIC/DPU/GPU 1028, which is coupled to network 1030 via switch 1048. NIC/DPU/GPU 1026 and NIC/DPU/GPU 1028 can be coupled to network 1030 over Ethernet (ETH), NVLINK or InfiniBand (IB) connections, for example.

Computing system 1000 also includes a processing device 1004 with a multi-GPU architecture. In particular, processing device 1004 includes multiple subsystems including a CPU 1016, a GPU 1018, and a GPU 1020. CPU 1016 can be coupled to GPU 1018 via a D2D or a C2C interconnect 1022. CPU 1016 can be coupled to GPU 1020 via a D2D or C2C interconnect 1024. CPU 1016 can also couple to GPU 1018 and GPU 1020 via PCIe interconnects. CPU 1016 can be coupled to one or more NICs or DPUs, which are coupled to one or more networks. For example, as illustrated in Fig. 5, CPU 1016 is coupled to a first NIC/DPU 1032, which is coupled to a network 1036. CPU 1016 is also coupled to a second NIC/DPU 1034, which is coupled to network 1036 via switch 1050. NIC/DPU 1032 and NIC/DPU 1034 can be coupled to network 1036 over Ethernet (ETH), NVLINK or InfiniBand (IB) connections.

In at least one embodiment, processing device 1002 and processing device 1004 can communicate with each other via a NIC/DPU/GPU 1038, such as over PCIe interconnects. Processing device 1002 and processing device 1004 can also communicate with each other over a high-bandwidth communication interconnects 1040, such as an NVLink interconnect or other high-speed interconnects.

In various embodiments, any of the network devices of system 1000, e.g., any of NICs/DPUs/GPUs 1026, 1028, 1032, 1034, and 1038, and/or any of CPUs 1006, 1016, GPUs 1008, 1010, 1018, and 1020 may support hot plug in of PCIe devices, using the techniques described above, with reference to Figs 1 through 7.

The configurations of AHS 100, 200, 300 and 400 and the method of flowcharts 500, 600 and 700 illustrated in Figs. 1 through 7 and described hereinabove, are example configurations and methods that are shown purely for the sake of conceptual clarity. Any other suitable configurations and methods can be used in alternative embodiments. The different elements of HS 100, 200, 300 and 400, and any components thereof, may be implemented in an integrated circuit, such as an application specific integrated circuit (ASIC) or a field-programmable gate-array (FPGA). Alternatively, some elements of AHS 100, 200, 300 and 400 may be implemented in software, or in combination of software and hardware elements.

Parent devices 102, 202, 302 and 402 typically comprise one or more general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

Although the embodiments described herein mainly describe adaptive hot plug-in systems, the methods and devices described herein can also be used in other applications.

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An Adaptive Hot-plug System (AHS), comprising:
a system bus comprising multiple lanes;
one or more system-bus slots for plugging-in one or more respective hot-pluggable modules;
an AHS controller, to indicate a presence of a hot-pluggable module that is plugged into a system bus slot among the system bus slots; and
a parent device that is coupled with the system bus, to: (i) retrieve, from a Non-Volatile Memory (NVM), a configuration of one or more of the lanes that are assigned to the system-bus slot, and (ii) in response to the AHS controller detecting the presence of the hot-pluggable module, apply the retrieved configuration.

2. The AHS according to claim 1, wherein the NVM comprises multiple NVM devices that are arranged in a hierarchy and have respective addresses, and wherein the parent device is to automatically discover the hierarchy by scanning the multiple addresses of the NVM devices.

3. The AHS according to claim 1 or 2, wherein the configuration specifies a number of the lanes that are assigned to the hot-pluggable module.

4. The AHS according to claim 1, 2, or 3, wherein the configuration specifies a size of a channel of the system bus that is connected to the hot-pluggable module.

5. The AHS according to any of claims 1-4, wherein the AHS controller is to detect the presence of the hot-pluggable module by detecting that the hot-pluggable module has been plugged into or removed from the system bus.

6. The AHS according to any of claims 1-5, further comprising an AHS bus multiplexer for communicating with the AHS controller and with at least one additional AHS controller.

7. The AHS according to any of claims 1-6, further comprising an interrupt aggregator for receiving interrupts from the AHS controller and from at least one additional AHS controller.

8. The AHS according to any of claims 1-7, wherein the parent device is to receive an indication of a surprise plug-in or of a managed plug-in of the hot-pluggable module.

9. An adaptive hot-plugging method, comprising:
operating a system including a system bus comprising multiple lanes, and one or more system-bus slots for plugging-in one or more respective hot-pluggable modules;
using an Adaptive Hot-plug System (AHS) controller, indicating a presence of a hot-pluggable module that is plugged into a system bus slot among the system bus slots; and
using a parent device that is coupled with the system bus, to: (i) retrieving, from a Non-Volatile Memory (NVM), a configuration of one or more of the lanes that are assigned to the system-bus slot, and (ii) in response to the AHS controller detecting the presence of the hot-pluggable module, applying the retrieved configuration.

10. The method according to claim 9, wherein the NVM comprises multiple NVM devices that are arranged in a hierarchy and have respective addresses, and comprising automatically discovering the hierarchy using the parent device, by scanning the multiple addresses of the NVM devices.

11. The method according to any of claims 9-10, wherein the configuration specifies a number of the lanes that are assigned to the hot-pluggable module.

12. The method according to any of claims 9-11, wherein the configuration specifies a size of a channel of the system bus that is connected to the hot-pluggable module.

13. The method according to any of claims 9-12, wherein detecting the presence of the hot-pluggable module comprises detecting that the hot-pluggable module has been plugged into or removed from the system bus.

14. The method according to any of claims 9-13, further comprising applying an AHS bus multiplexer to communicate with the AHS controller and with at least one additional AHS controller.

15. The method according to any of claims 9-14, further comprising applying an interrupt aggregator for receiving interrupts from the AHS controller and from at least one additional AHS controller.
